# EUROPEAN PATENT APPLICATION

(11) **EP 2 388 885 A2**
(43) Date of publication of application: **23.11.2011**
(21) Application number: 11159263.0
(22) Date of filing: 22.03.2011
(51) Int. Cl.: H02J 7/00

(54) **Electronic device and charging method thereof**

(30) Priority: 18.05.2010 TW 099115866
(71) Applicant: HannStar Display Corp., Taipei County 248 (TW)
(72) Inventor: Weng, Bomin, 241, Taipei County (TW)
(74) Representative: Karl, Frank

(57) **Abstract**

An electronic device (1, 2, 3, 4, 5, 6, 7, 8) for charging a rechargeable device (9) is provided. The electronic device (1, 2, 3, 4, 5, 6, 7, 8) includes a power supply system (10, 20, 30, 40) and a detecting circuit (11, 21, 31, 41, 71, 81), which is electrically connected with the power supply system (10, 20, 30, 40), wherein the power supply system (10, 20, 30, 40) shuts off a charging operation for the rechargeable device (9) when the detecting circuit (11, 21, 31, 41, 71, 81) detects that the rechargeable device (9) is fully charged.

## Description

The present invention relates to an electronic device for charging a rechargeable device and the charging method thereof, and specially relates to a display device for charging a rechargeable device and the charging method thereof.

As the technologies are advancing and product prices are continuously going down, plenty of portable electronic products, such as mobile phones, digital cameras, music players (e.g. MP3 players), have become more and more common than ever, and even have been turned into the indispensable parts of the people's daily lives. Since these portable electronic devices are frequently used, usually they need to be frequently charged. For the concern of the convenience, some common specifications for the electrical connection have been developed and enacted out, such as Universal Serial Bus (USB) specification, Electrical and Electronic Engineers 1394 (IEEE 1394) specification, etc. Therefore, as long as the users use the charging devices witch the same specification, these portable electronic products can be conveniently charged.

The electronic devices currently on the market, especially the display devices, e.g. televisions, monitors, digital photo frame, often have additional USB functions. Generally, the users often connect the USB ports with mobile phones, MP3 players, digital cameras for charging. However, if the system of the electronic device enters into the power saving mode, then the charging function is lost for the sake of complying with some environmental regulations, e.g. the regulations of Energy Star project disclosed by US Environmental Protection Agency (EPA). For example, as stated in the regulations of Energy Star version 4.0, the power consumption of the system under the power saving mode must be lower than 1 watt; while in version 5.0 this value is further reduced to be lower than 0.5 watts. As the environmental issues have gained more and more attentions, in the future more electronic products will be regulated and allowed to be sold in the market only when they comply with certain environmental regulations.

On the other hand, when the user forgets to unplug the fully charged MP3 player from the charging system, the full charged electricity in the MP3 player will gradually flow back to the charging system, and the voltage of the MP3 player will be completely gone after long time. Currently the above-mentioned conditions result in the very inconvenience for the users, and annoy the users a lot.

To solve the above problems, the inventor has done a lot of deep researches and analyses through numerous experiments and improvements, and finally developed a new electronic device and charging method thereof able to effectively address the above problems.

The electronic devices for charging the rechargeable device and the charging methods thereof are provided in the present invention, and can solve the problems that the electronic device under the power saving mode is incapable of charging and the charged voltages of fully charged rechargeable device flows back to the charging device.

In accordance with one aspect of the present invention, an electronic device for charging a rechargeable device is provided. The electronic device comprises a power supply system; and a detecting circuit connected with the power supply system, wherein the detecting circuit controls the power supply system to provide a power to the rechargeable device, when the electronic device is turned off and the detecting circuit detects that the rechargeable device is not fully charged.

In accordance with another aspect of the present invention, an electronic device for charging a rechargeable device is provided. The electronic device comprises a power supply system; and a detecting circuit electrically connected with the power supply system, wherein the power supply system shuts off a charging operation for the rechargeable device when the detecting circuit detects that the rechargeable device is fully charged.

In accordance with a further aspect of the present invention, a charging method of using an electronic device to charge a rechargeable device is provided. The charging method comprises steps of detecting whether the electronic device is turned off; detecting whether the rechargeable device is fully charged; and charging the rechargeable device by using the electronic device when the rechargeable device is not fully charged and the electronic device is turned off, wherein the electronic device includes one selected from a group consisting of a television, a monitor, a desktop computer and a digital photo frame.

In accordance with one more aspect of the present invention, a method for charging a rechargeable device is provided. The method comprises steps of a) detecting whether the rechargeable device is fully charged; and b) automatically shutting off a charging operation for the rechargeable device when the rechargeable device is fully charged.

The above objects and advantages of the present invention will become more readily apparent to those ordinarily skilled in the art after reviewing the following detailed descriptions and accompanying drawings, in which:

Fig. 1 is the schematic diagram showing the configuration of the element connection of the electronic device in the first embodiment of the present invention;

Fig. 2 is the schematic diagram showing the configuration of the element connection of the electronic device in the second embodiment of the present invention;

Fig. 3 is the schematic diagram showing the configuration of the element connection of the electronic device in the third embodiment of the present invention;

Fig. 4 is the schematic diagram showing the configuration of the element connection of the electronic device in the fourth embodiment of the present invention;

Fig. 5 is the schematic diagram showing the flow chart of the charging method in the fifth embodiment of the present invention;

Fig. 6 is the schematic diagram showing the flow chart of the charging method in the sixth embodiment of the present invention;

Fig. 7A is the schematic diagram showing the configuration of the element connection of the electronic device under the normal mode in the seventh embodiment of the present invention;

Fig. 7B is the schematic diagram showing the configuration of the element connection of the electronic device under the power saving mode in the seventh embodiment of the present invention;

Fig. 8A is the schematic diagram showing the configuration of the element connection of the electronic device under the normal mode in the eighth embodiment of the present invention; and

Fig. 8B is the schematic diagram showing the configuration of the element connection of the electronic device under the power saving mode in the eighth embodiment of the present invention.

The present invention will now be described more specifically with reference to the following embodiments. It is to be noted that the following descriptions of preferred embodiments of this invention are presented herein for the purposes of illustration and description only; it is not intended to be exhaustive or to be limited to the precise form disclosed.

[First Embodiment]

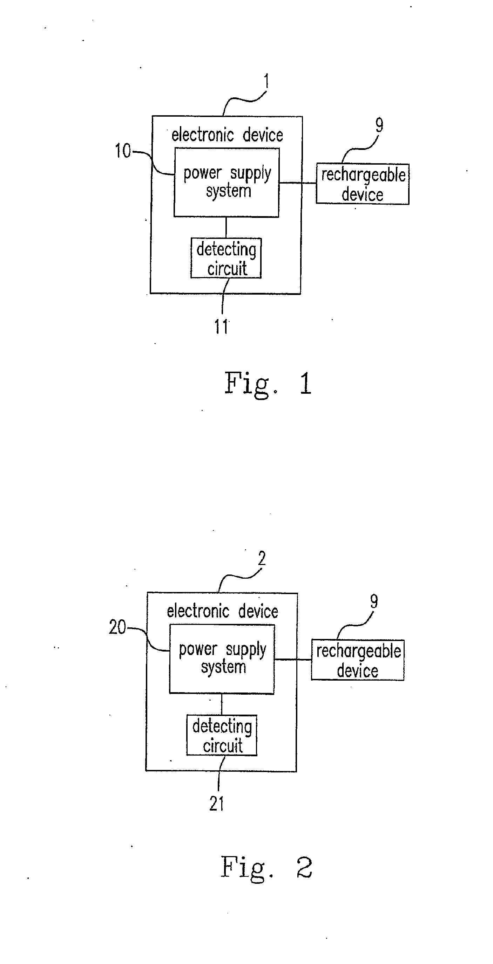

Please refer to Fig. 1, which shows the configuration of the element connection of the electronic device in the first embodiment of the present invention. In this embodiment, an electronic device 1 can electrically charge a rechargeable device 9. The electronic device 1 can include a power supply system 10 and a detecting circuit 11. The power supply system 10 will shut off the electric charging operations for the rechargeable device 9, when the detecting circuit 11 detects that the rechargeable device 9 has been fully charged. The design of this embodiment can avoid the condition that the charged voltage or current in the fully charged rechargeable device 9 gradually flows back to the power supply system 10 after a period of time. This condition frequently occurs when the electronic device 1 itself has the function of the automatic switch between the normal mode and the power saving mode so as to conform to the environmental regulations. In such a situation, the electronic device 1 has not received any command for a period of time after the rechargeable device 9 has been fully charged, and then automatically switches to the power saving mode from the normal mode. Then, the electronic device 1 consumes only slight amount of electricity of the standby power, and the condition that the fully charged voltage or current gradually flows back to the power supply system 10 is quite liable to occur. When the charged voltage or current flows back, the user has to detach the rechargeable device 9 from the power supply system 10, and then plugs the rechargeable device 9 in the power supply system 10 again for restarting the electric charging. This situation causes a lot of inconvenience for the user and wastes a lot of energy. The design of the present embodiment can avoid the above-mentioned flow back of the charged voltage or current, save the energy, and bring the great convenience to the user.

In the present embodiment, the electronic device 1 can be, but is not limited to, a television (e.g. LCD TV and plasma TV), a monitor (e.g. CRT monitor and LCD monitor), a computer (e.g. a desktop personal computer (PC), a laptop PC, a tablet PC, an industrial computer, etc.), a digital photo frame, an e-book, a personal digital assistant (PDA), an e-paper, a city navigator, a projector, a game player, etc.; the rechargeable device 9 can be a portable electronic device requiring the frequently electric charging, and can be, but is not limited to, for example, a mobile phone, a digital camera, a camcorder, a music player (e.g. MP3 player), a video player (e.g. mpeg player, DVD player, blue disc player), a tablet PC, a personal digital assistant (PDA), a city navigator, a global positioning system (GPS) display, etc. The above devices can be integrated together as well. For instance, the cellular phone can be integrated with the digital camera together. In this embodiment, the detecting circuit 11 can be an electronic chip.

[Second Embodiment]

Please refer to Fig. 2, which is the schematic diagram showing the configuration of the element connection of the electronic device in the second embodiment of the present invention. In this embodiment, the electronic device 2 can electrically charge the rechargeable device 9. The electronic device 2 can include the power supply system 20 and the detecting circuit 21. When the detecting device 21 detects that the rechargeable device 9 is not fully charged and the power supply system 20 is under the shut-off condition, the detecting circuit 21 can control the power supply system 20 to continue to supply the power to the rechargeable device 9. When the conventional electronic device is under the shut-off condition, only the slight standby power can be consumed. In this situation, the conventional electronic device can not provide the electric charging to the external device, and accordingly the electric charging can not be completed and may be stopped even though the power is only half charged. All the above situations cause a lot of troubles to the user. The design of the present embodiment utilizes the detecting circuit 21 for the detection and control, can avoid the problem that the rechargeable device not yet fully charged can not be further charged when the electronic device is under the shut-off condition, and can greatly promote the convenience for the user.

The application examples of the electronic device 2, the rechargeable device 9 and the detecting circuit 21 in this embodiment can be the same as those described in the first embodiment.

[Third Embodiment]

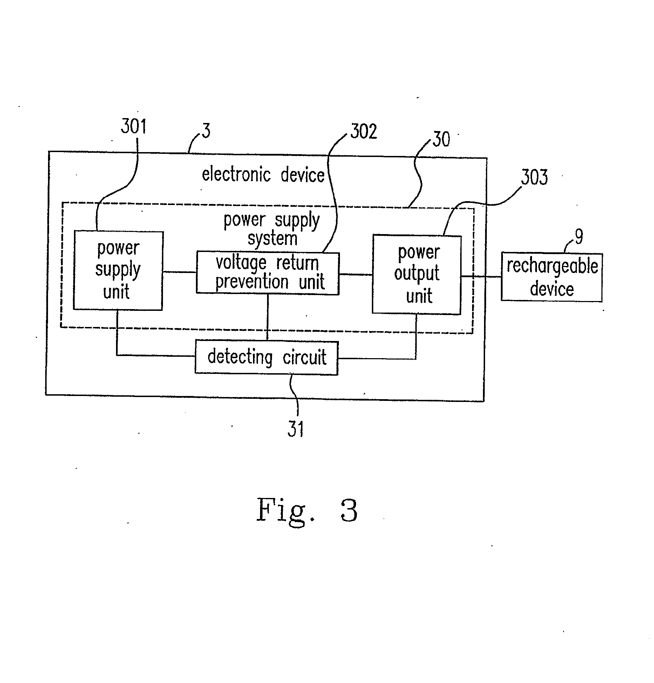

Please refer to Fig. 3, which is the schematic diagram showing the configuration of the element connection of the electronic device in the third embodiment of the present invention. In this embodiment, the electronic device 3 can electrically charge the rechargeable device 9. The electronic device 3 can include the power supply system 30 and the detecting circuit 31, the power supply system 30 can include the power supply unit 301, a voltage return prevention unit 302 and a power output unit 303, and the connections therebetween are shown in Fig. 3. The power supply unit 301 outputs the electric current to charge the rechargeable device 9 through the voltage return prevention unit 302 and the power output unit 303.

When the detecting circuit 31 detects that the rechargeable device 9 has been fully charged, the detecting circuit 31 will send out a signal to control the voltage return prevention unit 302 so as to electrically disconnect the power supply unit 301 form the power output unit 303. Therefore, the design of this embodiment is able to avoid the condition that the fully charged voltage or current in the rechargeable device 9 gradually flow back to the power supply unit 301 after a period of time. This condition frequently occurs when the electronic device 3 itself has the function of the automatic switching between the normal mode and the power saving mode so as to conform to the environmental regulations. In such a situation, the electronic device 3 has not received any command for a period of time after the rechargeable device 9 has been fully charged, and then automatically switches to the power saving mode from the normal mode. Then, the power supply unit 301 of the electronic device 3 consumes only slight amount of electricity of the standby power, and the condition that the fully charged voltage or current gradually flows back to the power supply unit 301 is quite liable to occur. When the charged voltage or current flows back, the user has to detach the rechargeable device 9 from the power output unit 303, and then plugs the rechargeable device 9 in the power output unit 303 again for restarting the electric charging. This situation causes a lot of inconvenience for the user and wastes a lot of energy. The design of the present embodiment can avoid the above-mentioned flow back of the charged voltage or current, save the energy, and bring the convenience to the user.

In this embodiment, when the detecting circuit 31 detects that the rechargeable device 9 has been fully charged, the voltage return prevention unit 302 can electrically disconnect the power supply unit 301 from the power output unit 303 so as to prevent the flow back of the charged current or voltage, even though the rechargeable device 9 is still mechanically plugged in the power output unit 303.

Furthermore, in some situation, the user may turn on the rechargeable device 9, which is still connected with the power output unit 303. For example, the rechargeable device 9 is a MP3 player, which is turned on by the user for listening the music; meanwhile, the fully charged power in the rechargeable device 9 starts to be consumed. In the further design of the present embodiment, the detecting circuit 31 can continuously detect the electricity condition of the rechargeable battery in the rechargeable device 9. When the rechargeable battery is not fully charged, the detecting circuit 31 will send out the signal to control the voltage return prevention unit 302 in order to restore the electrical connection between the power supply unit 301 and the power output unit 303, and the power supply unit 301 will charge the rechargeable device 9 through the power output unit 303.

In this embodiment, as long as the rechargeable device 9 is still connected with the electronic device 3, the detecting circuit 31 will continuously detect the electricity condition of the rechargeable battery in the rechargeable device 9; after the rechargeable battery is fully charged, the voltage return prevention unit 302 will electrically disconnect the power supply unit 301 form the power output unit 303 so as to prevent the flow-back of the charged current; when the electricity in the rechargeable battery of the rechargeable device 9 is consumed, the voltage return prevention unit 302 will restore the electrical connection between the power supply unit 301 and the power output unit 303 so as to charge the rechargeable device 9. Under the above mentioned operations, both purposes of the optimized convenience for the user and the power saving can be simultaneously achieved.

The application examples of the electronic device 3, the rechargeable device 9 and the detecting circuit 31 in this embodiment can be the same as those described in the first embodiment In addition, the power supply unit 301 in this embodiment can be a distribution board, a switch board, a power board, a power supply, etc.; the voltage return prevention unit 302 can be a switch, a two-terminal element, a three-terminal element, etc.; the power output unit 303 can be the output unit or the output port with the standards of the Universal Serial Bus (USB) or the Institute of Electrical and Electronics Engineers 1394 (IEEE 1394).

[Fourth Embodiment]

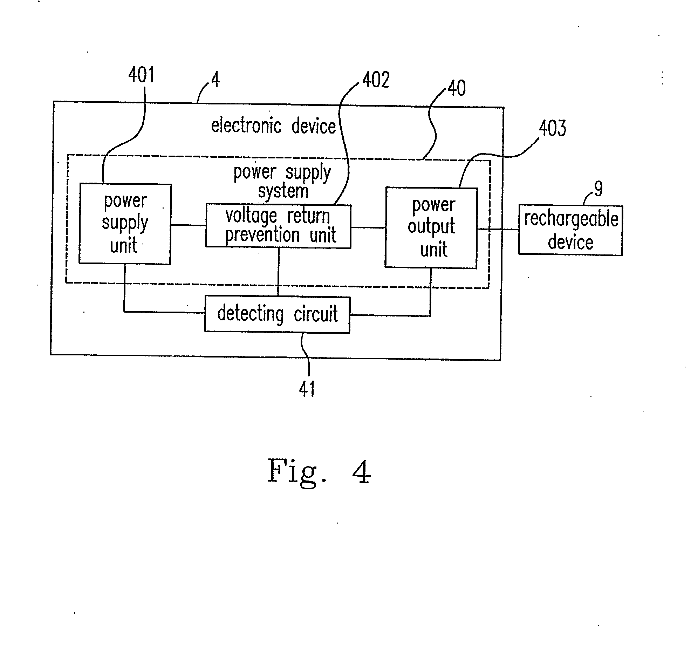

Please refer to Fig. 4, which is the schematic diagram showing the configuration of the element connection of the electronic device in the fourth embodiment of the present invention. In this embodiment, the electronic device 4 can electrically charge the rechargeable device 9. The electronic device 4 can include the power supply system 40 and the detecting circuit 41, the power supply system 40 can include the power supply unit 401, the voltage return prevention unit 402 and the power output unit 403, and the connections therebetween are shown in Fig. 4. The power supply unit 401 outputs electrical current to charge the rechargeable device 9 through the voltage return prevention unit 402 and the power output unit 403.

When the detecting circuit 41 detects that the rechargeable device 9 has not been fully charged and the power supply system 40 is under a shut-off condition, the detecting circuit 41 will send a signal to control the voltage return prevention unit 402 to be turned on so as to enable the power supply unit 401 to output the electrical current to charge the rechargeable device 9 via the voltage return prevention unit 402 and the power output unit 403. The design of the this embodiment can avoid the problem that the rechargeable device can not be further charged when it still has not been fully charged yet and the electronic device 4 is under a shut-off condition can be avoided. Thus, the design of this embodiment can greatly promote the convenience for the user.

The application examples of the electronic device 4, the rechargeable device 9 and the detecting circuit 41 in this embodiment can be the same as those described in the first embodiment. In addition, the application examples of the power supply unit 401, the voltage return prevention unit 402 and the power output unit 403 can be the same as those described in the third embodiment.

For instance, the electronic device 4 is a monitor of a computer, the rechargeable device 9 is a cellular phone, and the monitor has a power output unit, which is a USB output port. When the computer has not received any command for a period of time, the power saving mode is enabled automatically in the computer. This computer conforms to the Energy Star program version 5.0 disclosed by US Environmental Protection Agency. The power supply unit of this computer is a power supply, which power consumption is less than 0.5 watt under the power saving mode. According to the design of this embodiment, this computer has a detecting circuit 41, which is an electronic chip, and a voltage return prevention unit 402, which controls the electric connection between the power supply and the USB output port. When the detecting chip detects that the computer is under a power saving mode or a shut-off condition and the cellular phone has not been fully charged, the detecting chip will send out a signal to and turn on the voltage return prevention unit 402, and then enable the power supply to continuously supply power for charging the cellular phone.

[Fifth Embodiment]

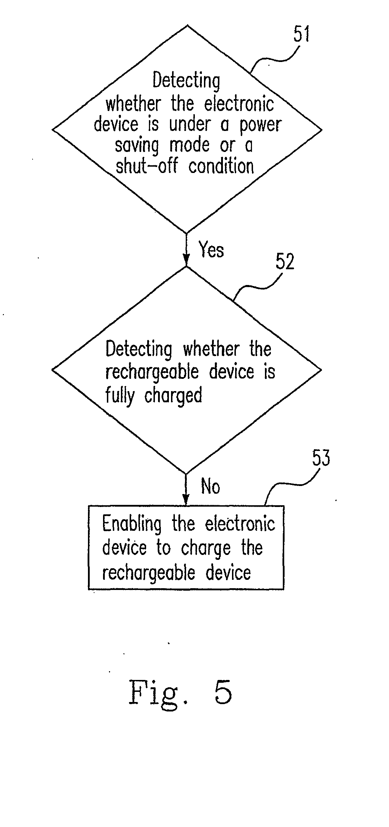

Please refer to Fig. 5, which is the schematic diagram showing the flow chart of the charging method in the fifth embodiment of the present invention. In this embodiment, firstly the step 51 of detecting whether the electronic device is under a power saving mode or a shut-off condition is performed. If the condition that the electronic device is under a power saving mode or a shut-off condition is detected, the step 52 of detecting whether the rechargeable device is fully charged is performed. If the condition that the rechargeable device has not been fully charged yet is detected, the step 53 of enabling the electronic device to continuously provide power for charging the rechargeable device. Therefore, the charging method in this embodiment can solve the problem that the rechargeable device not yet fully charged can not be further charged when the electronic device is under a power saving mode or a shut-off condition, and thus can greatly promote the conveniences for the users.

In addition, the sequence orders of the steps 51 and 52 can be exchanged with each other. That is, the step 52 of detecting whether the rechargeable device is fully charged is performed at first. If the condition that the rechargeable device has not been fully charged yet. Then, the step 51 of detecting whether the electronic device is under a power saving mode or a shut-off condition is followed. If the condition that the electronic device is under a power saving mode or a shut-off condition is detected, the step 53 of enabling the electronic device to provide power for charging the rechargeable device. On the other hand, the steps of 51 and 52 of the charging method in the present embodiment can simultaneously proceed as well with the same technical effect aimed by the present embodiment.

[Sixth Embodiment]

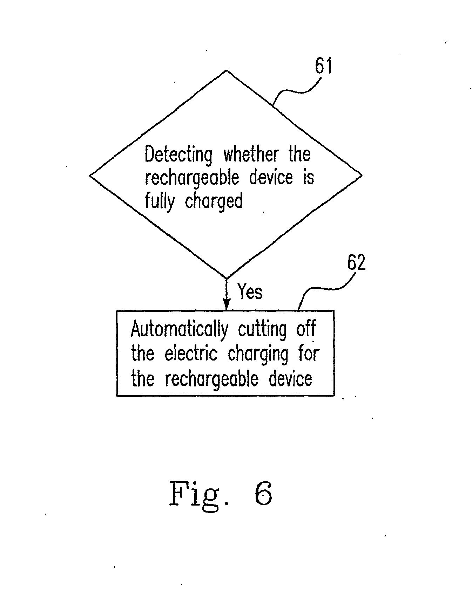

Please refer to Fig. 6, which is the schematic diagram showing the flow chart of the charging method in the sixth embodiment of the present invention. In this embodiment, at first, the step 61 of detecting whether the rechargeable device is fully charged is performed. If the condition that the rechargeable device has been fully charged is detected, the step 62 of automatically shutting off the charging operation for the rechargeable device. Therefore, the charging method in the present embodiment can avoid the problem that the charged electrical current of the fully charged rechargeable device flows back to the charging device after a period of time. Therefore, the charging method of the present embodiment can save energy and bring the convenience to the users.

[Seventh Embodiment]

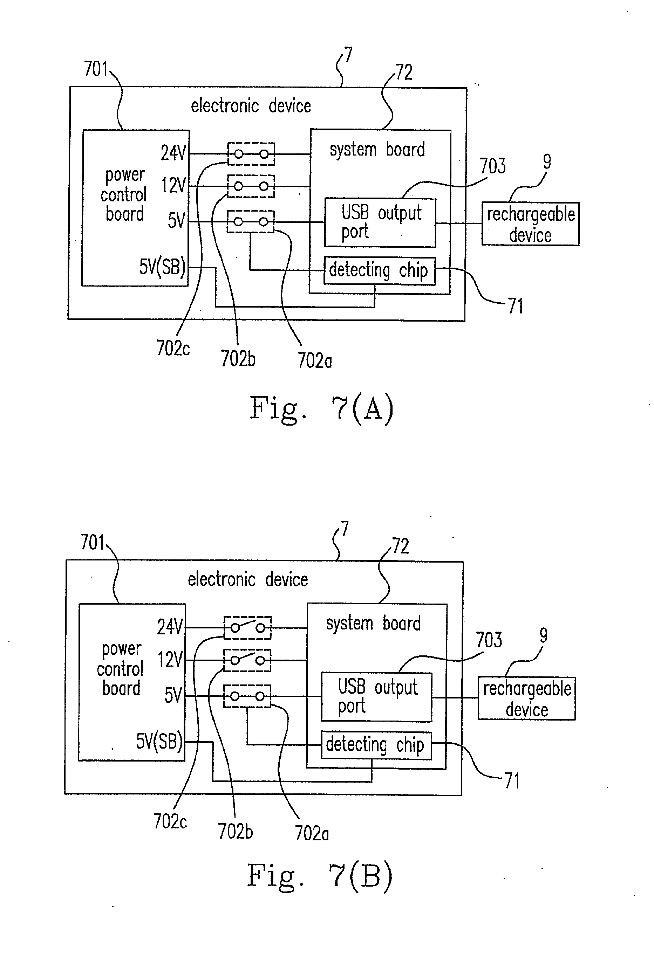

Please refer to Fig. 7A, which is the schematic diagram showing the configuration of the element connection of the electronic device under the normal mode in the seventh embodiment of the present invention. In this embodiment, the electronic device 7 includes a power supply unit (e.g. the power board 701 or power control board), switches 702a, 702b and 702c and the system board 72. The power control board 701 can provides plural the same and/or different voltage outputs, e.g. 24 voltage (V), 12V, 5V and 5V(SB) as shown in Fig. 7A, where the 5V(SB) is a 5V standby (SB) power output. The system board 72 includes the power output unit, e.g. USB output port 703, and the detecting chip 71. The power control board 701 outputs electrical current for charging the rechargeable device 9 via the switch 702a and USB output port 703. When the electronic device 7 is under a normal condition, the power control board 701 provides all the voltage outputs, so all the switches 702a, 702b and 702c are turned on.

Please refer to Fig. 7B, which is the schematic diagram showing the configuration of the element connection of the electronic device under the power saving mode in the seventh embodiment of the present invention. In this embodiment, when the detecting chip 71 detects that the power control board 701 is under the power saving mode and the rechargeable device 9 has not been fully charged yet, the detecting chip 71 will send out the signal to cause the switch 702a to be turned on, so that the power control board 701 can output the electrical current for continuously charging the rechargeable device 9 via the switch 702a and the USB output port 703. As shown in Fig. 7B, due to the power saving mode, both the switches 702b and 702c are turned off, so both the 12V and 24V outputs in the power control board 701 are stopped so as to reach the purpose of the power saving. Besides, the switches 702a, 702b and 702c in this embodiment can be selectively built in the power control board 701 or the system board 72. In addition, the detecting chip 71 may not be built in the system board 72, but alternatively is independently configured or built in some other electrical board.

To sum up, the present embodiment can avoid the problem that the rechargeable device not fully charged yet can not be further charged when the conventional electronic device is under the power saving mode. Therefore, this embodiment has the advantages of bringing the great convenience to the users and simultaneously saving the power.

[Eighth Embodiment]

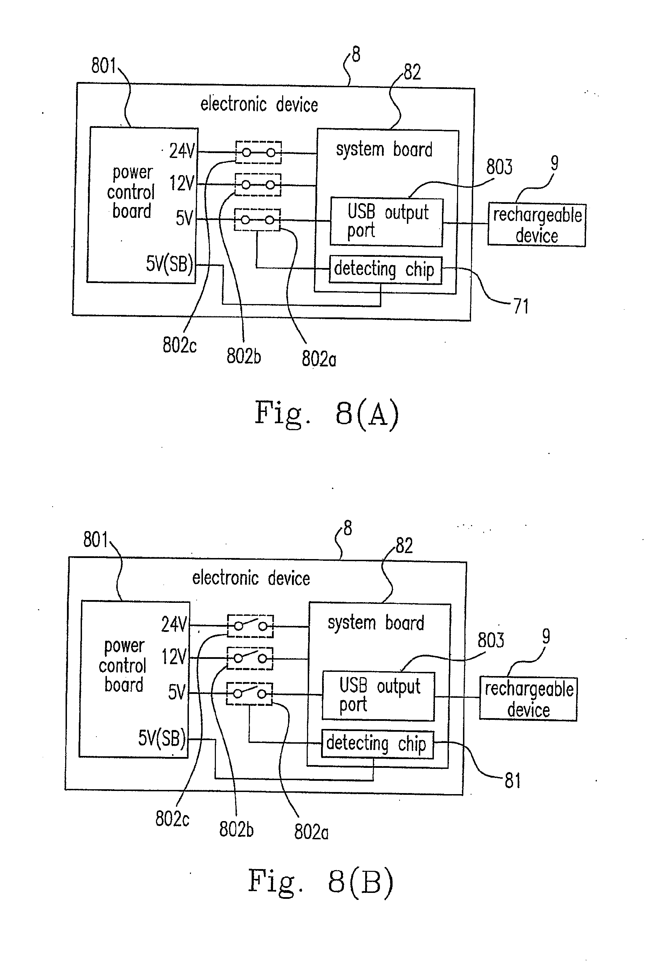

Please refer to Fig. 8A, which is the schematic diagram showing the configuration of the element connection of the electronic device under the normal mode in the eighth embodiment of the present invention. In this embodiment, the electronic device 8 includes a power supply unit (e.g. the power control board 801), the switches 802a, 802b and 802c and the system board 82. The power control board 801 can provide plural the same and/or different voltage outputs, e.g. 24V, 12V, 5V and 5V(SB) as shown in Fig. 8A, where the 5V(SB) is a 5V standby (SB) power output. The system board 82 includes the power output unit, e.g. USB output port 803, and the detecting chip 81. The power control board 801 outputs the electric current for charging the rechargeable device 9 via the switch 802a and the USB output port 803. When the electronic device 8 is under a normal condition, the power control board 801 provides all the voltage outputs, so all the switches 802a; 802b and 802c are turned on.

Please refer to Fig. 8B, which is the schematic diagram showing the configuration of the element connection of the electronic device under the power saving mode in the eighth embodiment of the present invention. In this embodiment, when the detecting chip 81 detects that the rechargeable device has been fully charged, the detecting chip will send out a signal to control the switch 802a to be turned off no matter whether the power control board 801 is under the power saving mode or not. Accordingly, the power control board 801 is electrically disconnected with the USB output port 803, so the charged voltage or current of the rechargeable device 9 after being fully charged will not flow back to the power control board 801. Therefore, this embodiment can save energy and bring the great convenience to the users.

As described in the third embodiment, in some circumstances, the user may turn on the rechargeable device 9, which is still connected with the USB output port 803. For instance, the rechargeable device 9 is a MP3 player, and the user turns on the MP3 player to listen to the music. After then, the fully charged electricity in the rechargeable device 9 starts to be consumed. Similar to the third embodiment, the detecting chip 81 in this embodiment is continuously detecting the electricity condition of the rechargeable battery in the rechargeable device 9. When the rechargeable battery is not fully charged, the detecting circuit 81 will send out a signal to control the switch 802a to be renewedly turned on, so the power supply board 801 renewedly makes the electric connection with the USB output port 803. That is, the switch 802a is turned on, and the power supply board 801 can electrically charge the rechargeable device 9 via the USB output port 803.

In this embodiment, as long as the rechargeable device 9 is still connected with the electronic device 3, the detecting circuit 81 will be continuously detecting the electricity condition of the rechargeable battery in the rechargeable device 9, and the following actions will be performed. When the rechargeable battery is fully charged, the power supply board 801 will be electrically disconnected with the USB output port 803 to prevent the condition that the charged current in the rechargeable device 9 flows back to the power supply board 801; when the power consumption in the rechargeable battery of the rechargeable device 9 occurs, the power supply board 801 will be renewedly and electrically connected with the USB output port 803 for renewedly charging the rechargeable device 9. Under the above mentioned operations, both purposes of the convenience for the user and the power saving can be simultaneously achieved.

In addition, similarly the switches 802a, 802b and 802c in this embodiment can be selectively built in the power control board 801 or the system board 82. In addition, the detecting chip 81 may not be built in the system board 82, but alternatively is independently configured or built in some other electric board.

To sum up the above first to eighth embodiments, the detecting circuit in the present invention has two functions: 1) controlling the power supply system to continuously charge the rechargeable device when detecting the conditions that the rechargeable device has not been fully charged and the electronic device is under a power saving mode or a shut-off condition; 2) causing the power supply system to shut off the charging operation for the rechargeable device, when detecting the condition that the rechargeable device has been fully charged; causing the renewedly charging for the rechargeable device when detecting the condition that the charged electricity of the rechargeable device is consumed. These two functions can be integrated together. Thus, optionally the first and the second embodiments can be integrated into the same apparatus. Similarly and optionally, the third and the fourth embodiments can also be integrated into the same apparatus, and the seventh and the eighth embodiments can be integrated into the same apparatus as well. Besides, the charging method in the fifth embodiment and that in the sixth embodiment can be optionally integrated into a complex charging method. All the above mentioned integrations are still within the concepts of the present invention.

Some referential embodiments are provided below for the further illustration.

In a first referential embodiment of the present invention, an electronic device for charging a rechargeable device is provided. The electronic device includes a power supply system; and a detecting circuit connected with the power supply system, wherein the detecting circuit controls the power supply system to provide a power to the rechargeable device, when the electronic device is turned off and the detecting circuit detects that the rechargeable device is not fully charged.

In a second referential embodiment of the present invention, the power supply system in the electronic device of the first referential embodiment includes a power supply unit electrically connected with the detecting circuit; a voltage return prevention unit electrically connected with the power supply unit and the detecting circuit; and a power output unit electrically connected with the voltage return prevention unit and the detecting circuit.

In a third referential embodiment of the present invention, the electronic device of any one of the above referential embodiments includes one selected from a group consisting of a television, a monitor, a desktop computer, a tablet personal computer (PC), a personal digital assistant (PDA), an e-book, an e-paper, a mobile phone, a city navigator, a projector, a video player and a digital photo frame, and in the electronic device of any one of the above referential embodiments, the power supply unit outputs an electric current to charge the rechargeable device through the voltage return prevention unit and the power output unit; the detecting circuit controls the power supply unit to charge the rechargeable device through the power output unit when the electronic device is turned off and the detecting circuit detects that the rechargeable device is not fully charged; and the detecting circuit controls the voltage return prevention unit to electrically disconnect the power supply unit from the power output unit when the detecting circuit detects that the rechargeable device is fully charged.

In a fourth referential embodiment of the present invention, in the electronic device in any one of the above referential embodiments, the rechargeable device comprises one selected from a group consisting of a mobile phone, a camera, a camcorder, a portable audio player, a portable video player, a personal digital assistant (PDA), a tablet personal computer (PC), a city navigator, a global positioning system (GPS) device and a combination thereof, the power output unit has a communication specification being of one of a universal serial bus (USB) standard and an Institute of Electrical and Electronics Engineers 1394 (IEEE 1394) standard, the power supply unit comprises one selected from a group consisting of a distribution board, a power control board and a power supply, and the voltage return prevention unit comprises one selected from a group consisting of a switch, a two-terminal element and a three-terminal element.

In a fifth referential embodiment of the present invention, an electronic device for charging a rechargeable device is provided. The electronic device comprises a power supply system; and a detecting circuit electrically connected with the power supply system, wherein the power supply system shuts off a charging operation for the rechargeable device when the detecting circuit detects that the rechargeable device is fully charged.

In a sixth referential embodiment of the present invention, the electronic device of any one of the above referential embodiments comprises one selected from a group consisting of a television, a monitor, a computer, an e-book, an e-paper, a mobile phone, a city navigator, a projector, a digital photo frame, a video player and a combination thereof.

In a seventh referential embodiment of the present invention, in the electronic device of any one of the above referential embodiments, the power supply system comprises a power supply unit electrically connected with the detecting circuit; a voltage return prevention unit electrically connected with the power supply unit and the detecting circuit; and a power output unit electrically connected with the voltage return prevention unit and the detecting circuit.

In an eighth referential embodiment of the present invention, in the electronic device of any one of the above referential embodiments, the power supply unit outputs an electrical current to charge the rechargeable device through the voltage return prevention unit and the power output unit; the detecting circuit controls the voltage return prevention unit to electrically disconnect the power supply unit from the power output unit when the detecting circuit detects that the rechargeable device is fully charged; and the detecting circuit controls the power supply unit to charge the rechargeable device when the electronic device is turned off and the detecting circuit detects that the rechargeable device is not fully charged.

In a ninth referential embodiment of the present invention, in the electronic device of any one of the above referential embodiments, the rechargeable device comprises one selected from a group consisting of a mobile phone, a camera, a camcorder, a portable audio player, a portable video player, a personal digital assistant (PDA), a table PC, a city navigator, a global positioning system (GPS) device and a combination thereof, and the power output unit has a communication specification being of one of a universal serial bus (USB) standard and an Institute of Electrical and Electronics Engineers 1394 (IEEE 1394) standard.

In a tenth referential embodiment of the present invention, in the electronic device of any one of the above referential embodiments, the power supply unit comprises one selected from a group consisting of a distribution board, a power control board and a power supply, and the voltage return prevention unit comprises one selected from a group consisting of a switch, a two-terminal element and a three-terminal element.

In an eleventh referential embodiment of the present invention, in the electronic device of any one of the above referential embodiments, the detecting circuit continuously detects a charging condition of the rechargeable device, and controls the power supply system to charge the rechargeable device when the rechargeable device is not fully charged, and to shut off again a charging operation for the rechargeable device when the rechargeable device is once more fully charged.

In a twelfth referential embodiment of the present invention, a charging method of using an electronic device to charge a rechargeable device is provided. The charging method comprises steps of detecting whether the electronic device is turned off; detecting whether the rechargeable device is fully charged; and charging the rechargeable device by using the electronic device when the rechargeable device is not fully charged and the electronic device is turned off, wherein the electronic device includes one selected from a group consisting of a television, a monitor, a desktop computer and a digital photo frame.

In a thirteenth referential embodiment of the present invention, the electronic device of any one of the above referential embodiment includes one selected from a group consisting of a television, a monitor, a desktop computer, a tablet personal computer (PC), a personal digital assistant (PDA), an e-book, an e-paper, a mobile phone, a city navigator, a projector, a video player and a digital photo frame.

In a fourteenth referential embodiment of the present invention, in the charging method of any one of the above referential embodiments, the electronic device comprises a power supply unit; a voltage return prevention unit electrically connected with the power supply unit; and a power output unit electrically connected with the voltage return prevention unit; and a detecting circuit electrically connected with the power supply unit, the voltage return prevention unit and the power output unit.

In a fifteenth referential embodiment of the present invention, the charging method of any one of the above referential embodiments further comprises steps of enabling the power supply unit to output an electric current for charging the rechargeable device through the power output unit; detecting whether the power supply unit is turned off by using the detecting circuit; detecting whether the rechargeable device is fully charged by using the detecting circuit; controlling the power supply unit to charge the rechargeable device through the power output unit when the power supply unit is turned off and the rechargeable device is not fully charged; and controlling the voltage return prevention unit to disconnect the power supply unit from the power output unit when the rechargeable device is fully charged.

In a sixteenth referential embodiment of the present invention, a method for charging a rechargeable device is provided. The charging method comprises steps of a) detecting whether the rechargeable device is fully charged; and b) automatically shutting off a charging operation for the rechargeable device when the rechargeable device is fully charged.

In a seventeenth referential embodiment of the present invention, the charging method of any one of the above referential embodiments further comprises a step of using an electronic device to charge the rechargeable device.

In an eighteenth referential embodiment of the present invention, in the charging method of any one of the above referential embodiments, the electronic device comprises a power supply unit; a voltage return prevention unit electrically connected with the power supply unit; and a power output unit electrically connected with the voltage return prevention unit; and a detecting circuit electrically connected with the power supply unit, the voltage return prevention unit and the power output unit.

In a nineteenth referential embodiment of the present invention, the charging method of any one of the above referential embodiments further comprises steps of enabling the power supply unit to output an electric current for charging the rechargeable device through the voltage return prevention unit and the power output unit; detecting whether the rechargeable device is fully charged by using the detecting circuit; detecting whether the power supply unit is turned off by using the detecting circuit; controlling the voltage return prevention unit to disconnect the power supply unit from the power output unit when the rechargeable device is fully charged; and controlling the power supply unit to charge the rechargeable device through the power output unit when the power supply unit is turned off and the rechargeable device is not fully charged.

In a twentieth referential embodiment of the present invention, the charging method of any one of the above referential embodiments further comprises steps of (c) continuously charging the rechargeable device when the rechargeable device is not fully charged; and (d) repeating the steps (a) to (c).

To sum up, the present invention provides several electronic devices and charging methods, where the detecting circuit is utilized to detect whether the rechargeable device has been fully charged and whether the electronic device is under a power saving mode or a shut-off condition so as to determine whether the electronic device is going to continuously charge the rechargeable device or to be electrically disconnected with the rechargeable device. Thus, the present invention can solve the first problem that the rechargeable device not fully charged yet can not be further charged when the conventional electronic device is under a power saving mode or a shut-off condition, and the second problem that the charged current or voltage of the recharged device after being fully charged gradually flows back to the charging device. Accordingly, the effects of bringing the great convenience to the users and saving the energy can be successfully and simultaneously achieved by using the technical schemes in the present invention.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. An electronic device (1, 2, 3, 4, 5, 6, 7, 8) for charging a rechargeable device (9), **characterized by** comprising:
a power supply system (10, 20, 30, 40); and
a detecting circuit (11, 21, 31, 41, 71, 81) electrically connected with the power supply system (10, 20, 30, 40), wherein the power supply system (10, 20, 30, 40) shuts off a charging operation for the rechargeable device (9) when the detecting circuit (11, 21, 31, 41, 71, 81) detects that the rechargeable device (9) is fully charged.

2. An electronic device (1, 2, 3, 4, 5, 6, 7, 8) of Claim 1, **characterized by** comprising one selected from a group consisting of a television, a monitor, a computer, an e-book, an e-paper, a mobile phone, a city navigator, a projector, a digital photo frame, a video player and a combination thereof.

3. An electronic device (1, 2, 3, 4, 5, 6, 7, 8) of Claim 1, **characterized in that** the power supply system (10, 20, 30, 40) comprises:
a power supply unit (301, 401, 701, 801) electrically connected with the detecting circuit (11, 21, 31, 41, 71, 81);
a voltage return prevention unit (302, 402) electrically connected with the power supply unit (301, 401, 701, 801) and the detecting circuit (11, 21, 31, 41, 71, 81); and
a power output unit (303, 403, 703, 803) electrically connected with the voltage return prevention unit (302, 402) and the detecting circuit (11, 21, 31, 41, 71, 81).

4. An electronic device (1, 2, 3, 4, 5, 6, 7, 8) of Claim 3, **characterized in that**:
the power supply unit (301, 401, 701, 801) outputs an electrical current to charge the rechargeable device (9) through the voltage return prevention unit (302, 402) and the power output unit (303, 403, 703, 803);
the detecting circuit (11, 21, 31, 41, 71, 81) controls the voltage return prevention unit (302, 402) to electrically disconnect the power supply unit (301, 401, 701, 801) from the power output unit (303, 403, 703, 803) when the detecting circuit (11, 21, 31, 41, 71, 81) detects that the rechargeable device (9) is fully charged; and
the detecting circuit (11, 21, 31, 41, 71, 81) controls the power supply unit (301, 401, 701, 801) to charge the rechargeable device (9) when the electronic device (1, 2, 3, 4, 5, 6, 7, 8) is turned off and the detecting circuit (11, 21, 31, 41, 71, 81) detects that the rechargeable device (9) is not fully charged.

5. An electronic device (1, 2, 3, 4, 5, 6, 7, 8) of Claim 3, **characterized in that** the rechargeable device (9) comprises one selected from a group consisting of a mobile phone, a camera, a camcorder, a portable audio player, a portable video player, a personal digital assistant (PDA), a tablet personal computer (PC), a city navigator, a global positioning system (GPS) device and a combination thereof, and the power output unit (303, 403, 703, 803) has a communication specification being of one of a universal serial bus (USB) standard and an Institute of Electrical and Electronics Engineers 1394 (IEEE 1394) standard.

6. An electronic device (1, 2, 3, 4, 5, 6, 7, 8) of Claim 3, **characterized in that** the power supply unit (301, 401, 701, 801) comprises one selected from a group consisting of a distribution board, a power control board and a power supply, and the voltage return prevention unit (302, 402) comprises one selected from a group consisting of a switch, a two-terminal element and a three-terminal element.

7. An electronic device (1, 2, 3, 4, 5, 6, 7, 8) of Claim 1, **characterized in that** the detecting circuit (11, 21, 31, 41, 71, 81) continuously detects a charging condition of the rechargeable device (9), and controls the power supply system (10, 20, 30, 40) to charge the rechargeable device (9) when the rechargeable device (9) is not fully charged, and to shut off again a charging operation for the rechargeable device (9) when the rechargeable device (9) is once more fully charged.

8. A method for charging a rechargeable device (9), **characterized by** comprising steps of:
a) detecting whether the rechargeable device (9) is fully charged; and
b) automatically shutting off a charging operation for the rechargeable device (9) when the rechargeable device (9) is fully charged.

9. A method of Claim 8, **characterized by** further comprising a step of using an electronic device (1, 2, 3, 4, 5, 6, 7, 8) to charge the rechargeable device (9).

10. A method of Claim 9, **characterized in that** the electronic device (1, 2, 3, 4, 5, 6, 7, 8) comprises:
a power supply unit (301, 401, 701, 801);
a voltage return prevention unit (302, 402) electrically connected with the power supply unit (301,401, 701, 801); and
a power output unit (303, 403, 703, 803) electrically connected with the voltage return prevention unit (302, 402); and
a detecting circuit (11, 21, 31, 41, 71, 81) electrically connected with the power supply unit (301, 401, 701, 801), the voltage return prevention unit (302, 402) and the power output unit (303, 403, 703, 803).

11. A method of Claim 10, **characterized by** further comprising steps of:
enabling the power supply unit (301, 401, 701, 801) to output an electric current for charging the rechargeable device (9) through the voltage return prevention unit (302, 402) and the power output unit (303, 403, 703, 803);
detecting whether the rechargeable device (9) is fully charged by using the detecting circuit (11, 21, 31, 41, 71, 81);
detecting whether the power supply unit (301, 401, 701, 801) is turned off by using the detecting circuit (11, 21, 31, 41, 71, 81);
controlling the voltage return prevention unit (302, 402) to disconnect the power supply unit (301, 401, 701, 801) from the power output unit (303, 403, 703, 803) when the rechargeable device (9) is fully charged; and
controlling the power supply unit (301, 401, 701, 801) to charge the rechargeable device (9) through the power output unit (303, 403, 703, 803) when the power supply unit (301, 401, 701, 801) is turned off and the rechargeable device (9) is not fully charged.

12. A method of Claim 9, **characterized in that** the electronic device (1, 2, 3, 4, 5, 6, 7, 8) comprises one selected from a group consisting of a television, a monitor, a computer, an e-book, an e-paper, a mobile phone, a city navigator, a projector, a digital photo frame, a video player and a combination thereof

13. A method of Claim 8, **characterized by** further comprising steps of:
(c) continuously charging the rechargeable device (9) when the rechargeable device (9) is not fully charged; and
(d) repeating the steps (a) to (c).

14. A method of Claim 8, **characterized in that** the rechargeable device (9) comprises one selected from a group consisting of a mobile phone, a camera, a camcorder, a portable audio player, a portable video player, a personal digital assistant (PDA), a tablet personal computer (PC), a city navigator, a global positioning system (GPS) device and a combination thereof, and the power output unit (303, 403, 703, 803) has a communication specification being of one of a universal serial bus (USB) standard and an Institute of Electrical and Electronics Engineers 1394 (IEEE 1394) standard.
